## Europäisches Patentamt
## European Patent Office
## Office européen des brevets

(19)

(11) Numéro de publication: **0 199 655**
**B1**

(12) # FASCICULE DE BREVET EUROPÉEN

(45) Date de publication du fascicule du brevet:
**02.11.88**

(51) Int. Cl.⁴: **F 28 D 13/00, B 01 J 8/18**

(21) Numéro de dépôt: **86400898.2**

(22) Date de dépôt: **24.04.86**

(54) **Echangeur à lit fluidisé pour transfert de chaleur.**

(30) Priorité: **24.04.85 FR 8506248**

(43) Date de publication de la demande:
**29.10.86 Bulletin 86/44**

(45) Mention de la délivrance du brevet:
**02.11.88 Bulletin 88/44**

(84) Etats contractants désignés:
**AT BE CH DE GB IT LI LU NL SE**

(56) Documents cité:
**EP-A-0 037 243**
**EP-A-0 095 427**
**WO-A-80/02193**
**FR-A-1 128 881**
**FR-A-2 032 925**
**FR-A-2 203 964**
**GB-A-1 395 900**
**GB-A-1 439 457**
**GB-A-2 105 455**
**US-A-3 242 974**

(73) Titulaire: **CHARBONNAGES DE FRANCE,
Etablissement public dit:, Tour Albert 1er 65
avenue de Colmar, F-92507 Rueil Malmaison
Cédex (FR)**

(72) Inventeur: **Large, Jean- François, 61, rue Carnot,
F-60200 Compiègne (FR)**
Inventeur: **Guigon, Pierre François, 2 rue du Clos
des Vignes, F-60880 Le Meux (FR)**

(74) Mandataire: **Chevallier, Robert Marie Georges,
Cabinet BOETTCHER 23, rue La Boétie, F-75008
Paris (FR)**

EP 0 199 655 B1

LIBER, STOCKHOLM 1988

## Description

L'invention a pour objet un échangeur de chaleur à lit fluidisé servant à réaliser un échange thermique réglable avec souplesse sur un écoulement de produits pulvérulents qui intervient au cours de la mise en oeuvre d'un procédé comportant un traitement thermique, comme par exemple la calcination de minerais ou la combustion de charbon en lit circulant.

Il est souhaitable qu'un tel transfert, par exemple une récupération, s'effectue dans une installation qui soit aussi compacte que possible et qui possède une souplesse de fonctionnement aussi grande que possible. Ces deux conditions ne sont pas remplies de manière satisfaisante avec les installations connues jusqu'à présent. On utilise actuellement des lits fluidisés classiques ou multicellulaires dans lesquels sont immergés des tubes d'échange de chaleur ces appareils sont encombrants et leur puissance thermique ne varie que dans une gamme restreinte, par paliers, de manière discontinue. On utilise aussi des lits mobiles, aérés ou non aérés, dans lesquels sont immergés des tubes d'échange de chaleur leur fonctionnement est difficilement contrôlable en raison d'une mauvaise répartition des solides et leur efficacité est médiocre.

Le but principal de l'invention est, par conséquent, d'apporter un échangeur de chaleur réalisant un échange thermique à rendement amélioré entre une charge de produits pulvérulents mis en circulation à l'état fluidisé et des tubes d'échange de chaleur immergés dans ces produits fluidisés dans lesquels ci rcule un fluide à réchauffer et à refroidir. L'invention vise aussi à réguler de manière continue le transfert thermique entre les produits pulvérulents et les tubes d'échange de chaleur.

On connaît par le document FR-A-2 203 964 un appareil pour modifier la température de travail d'un lit fluidisé dans lequel il existe deux enceintes de fluidisation qui ont une cloison commune et qui sont mises en communication par une ouverture inférieure pratiquée dans cette cloison juste au-dessus de la grille de fluidisation et une ouverture supérieure au niveau supérieur du lit fluidisé. L'une de ces enceintes contient des tubes d'un échangeur de chaleur dans lesquels circule un liquide. Il se produit donc dans cette enceinte un transfert thermique entre les particules du lit fluidisé et les tubes de l'échangeur. Mais ce document ne donne aucune précision sur les conditions qui peuvent influer sur le transfert thermique réalisé.

Deux autres documents antérieurs WO-A-80/02193 et GB-A-1 395 900 fournissent des indications, le premier sur la disposition des tubes et la vitesse de fluidisation, le second sur la dimension des particules en relation avec la densité de la matière qui les compose, pour des lits fluidisés dans lesque ls sont noyés des tubes d'un échangeur de chaleur.

Mais il s'agit, dans les deux cas, du transfert thermique entre le gaz de fluidisation et les tubes, sans circulation du lit fluidisé entre deux enceintes, de sorte que les indications fournies tendent à restreindre les déplacements des particules en vue de s'opposer à leur entraînement par le gaz de fluidisation qui doit, par ailleurs, subir une perte de vitesse ou de charge aussi faible que possible en traversant le lit fluidisé.

L'invention part d'un échangeur de chaleur qui comprend deux enceintes de fluidisation alimentées séparément en gaz de fluidisation, à savoir une première enceinte munie de moyens d'alimentation en un milieu caloporteur sous forme de particules, une seconde enceinte proche de la première, ayant une ouverture inférieure latérale de communication avec cette première enceinte et une sortie d'évacuation du milieu caloporteur et contenant des tubes d'échange de chaleur noyés dans le lit fluidisé. Selon l'invention, les particules du milleu caloporteur ont des dimensions moyennes comprises entre 50 et 3 000 micromètres, la vitesse maximale du gaz de fluidisation dans la seconde enceinte est comprise entre 1,5 fois et 10 fois la vitesse minimale de fluidisation des particules du milieu caloporteur, les tubes d'échange de chaleur sont substantiellement horizontaux et séparés par un écart horizontal (distance entre les axes de deux tubes voisins mesurée dans un plan horizontal) qui est compris entre 1, 2 fois et 3 fois le diamètre extérieur de ces tubes. Les tubes ont des parties de leur longueur qui sont séparées par une distance verticale; l'écart vertical, ou distance verticale entre les axes de deux tubes voisins mesurée dans un plan vertical, est compris entre 1, 2 et 3 fois le diamètre extérieur de ces tubes.

De préférence, les particules ont des dimensions moyennes choisies entre 100 et 2000 micromètres et la vitesse maximale du gaz de fluidisation est choisie entre 6 et 9 fois la vitesse minimale de fluidisation de ces particules; une valeur préférée de l'écart horizontal est 1,5 fois le diamètre extérieur des tubes et une valeur préférée de l'écart vertical est aussi de 1,5 fois leur diamètre extérieur.

Une caractéristique importante de l'échangeur de chaleur conforme à l'invention est la compacité du faisceau des tubes à l'intérieur de la seconde enceinte de fluidisation, compacité qui s'exprime par les écarts définis plus haut et qui impliquent que cette seconde enceinte est remplie dans toute sa partie efficace de tubes disposés avec les écarts indiqués.

Quand la compacité du faisceau des tubes atteint la compacité critique mentionnée dans le cadre de l'invention, il se crée, toutes choses étant égales par ailleurs, une différence de la densité moyenne des lits fluidisés dans les deux enceintes. Cette densité est plus faible dans la seconde enceinte, ce qui engendre un courant de circulation du milieu caloporteur entre les deux enceintes, de la première vers la seconde. Par ailleurs, du fait de la compacité des tubes, il se produit un plus grand frottement des particules solides contre les tubes d'échange de chaleur. Les deux effets (densité diminuée favorisant la circulation et plus grand frottement contre les tubes limitant la circulation) sont antagonistes et conduisent à un débit de circulation résultant qui a pour effet d'améliorer le transfert thermique entre le milieu fluidisé et les tubes. Ce phénomène se produit même quand les vitesses de fluidisation sont identiques dans chacune des deux enceintes. Toutefois, il est clair que la circulation à l'intérieur de la seconde enceinte est affectée aussi par le débit du gaz de fluidisation dans cette dernière, ou autrement dit par les valeurs relatives des débits des gaz de fluidisation dans la première et dans la seconde enceinte. Ainsi, tout en conservant l'avantage d'un coefficient de transfert amélioré, on peut moduler la puissance de l'échange thermique dont est capable l'échangeur de l'invention en faisant varier la vitesse de fluidisation dans chacune des deux enceintes.

Les moyens d'alimentation en milieu caloporteur de la première enceinte peuvent être constitués par un tube descendant plongeant dans le lit fluidisé, dans le cas où l'on souhaite réaliser un isolement pneumatique entre l'échangeur de chaleur et le séparateur se trouvant en amont.

La sortie d'évacuation de la seconde enceinte de fluidisation peut être une sortie de trop-plein qui débouche à l'extérieur ou, en variante, dans la première enceinte à un niveau supérieur au niveau du lit fluidisé que contient celle-ci.

Selon une autre variante de réalisation, la première enceinte et la seconde enceinte de fluidisation sont contenues dans une enveloppe générale commune et sont individualisées par une cloison interne de hauteur inférieure à celle du lit fluidisé.

Dans ce cas, les gaz de fluidisation sont avantageusement évacués par la sortie de trop-plein débouchant de l'une ou l'autre enceinte. Toutefois, si on le veut, les gaz de fluidisation pourront être évacués, hors de chaque enceinte, par des sorties spéciales prévues a cet effet, ou par des trop-pleins à condition de prévoir une cloison supérieure dont la base est immergée dans le lit fluidisé; en variante, on pourra prévoir une sortie spéciale pour la sortie des gaz hors de la première enceinte et l'évacuation des gaz avec les solides hors de la deuxième enceinte.

Si on veut améliorer encore la souplesse de l'échangeur, on peut placer une vanne mécanique ou non mécanique au niveau de l'ouverture inférieure latérale de communication entre les deux enceintes pour moduler le débit de circulation des solides entre les deux enceintes. Son effet se superpose alors à celui qui est lié au débit relatif des gaz de fluidisation dans la première et la deuxième enceinte. En pratique, on peut utiliser la vanne comme seul moyen de réglage en gardant les débits de fluidisation constants. On peut aussi moduler la puissance à chaque réglage de vanne en faisant varier les débits de fluidisation. On peut aussi utiliser simultanément les deux moyens de réglage.

On donnera maintenant une description de deux exemples de réalisation d'un échangeur de récupération de chaleur conforme à l'invention. On se reportera au dessin annexé dans lequel:

- la figure 1 est une représentation schématique d'un premier exemple de réalisation,
- la figure 2 est une représentation schématique d'un deuxième exemple de réalisation,
- les figures 3 et 4 sont des vues de détail montrant un exemple de disposition des tubes.

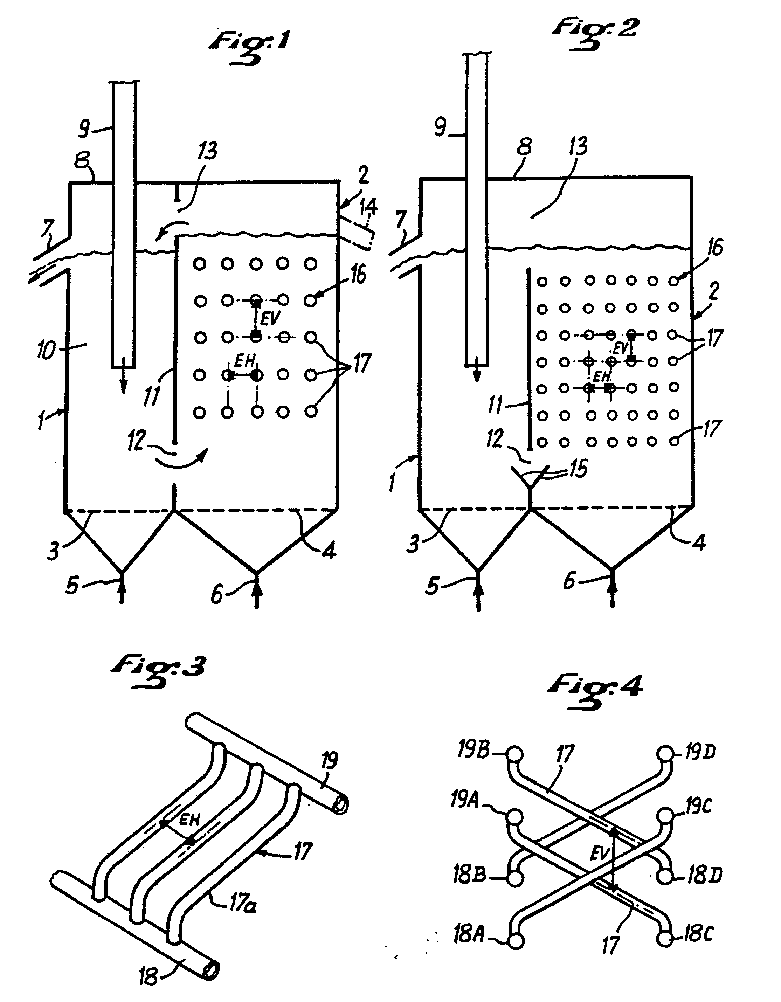

Les figures 1 et 2 se rapportent à un échangeur de chaleur selon l'invention comprenant une première enceinte 1 de fluidisation accolée et mise en communication avec une seconde enceinte 2 de fluidisation ces deux enceintes 1, 2 ont chacune une grille 3, 4 respectivement et leur propre arrivée de gaz de fluidisation 5, 6 respectivement, ce qui permet de fluidiser séparément le contenu de l'une et de l'autre enceinte. L'enceinte 1 a dans sa partie supérieure un tube 7 d'évacuation de trop-plein dirigé vers le bas; de plus cette enceinte 1 a une paroi supérieure 8 de fermeture qui est traversée par un tube descendant 9 par où arrive le milieu caloporteur en particules, chargé de calories, en provenance par exemple d'un séparateur tel qu'un cyclone faisant suite à un réacteur de traitement ou à une chaudière à lit fluidisé. Le tube 9 s'enfonce à l'intérieur du lit fluidisé 10 dont le niveau normal est celui du tube de trop-plein 7; l'enfoncement du tube 9 dans le lit 10 est déterminé pour qu'il assure l'isolement pneumatique de l'échangeur de chaleur par rapport au séparateur se trouvant en amont.

L'enceinte 2 est séparée de l'enceinte 1 par une paroi 11 qui a une ouverture inférieure 12 de communication entre les deux enceintes et une ouverture supérieure 13 de communication entre les deux enceintes. La différence entre les exemples des figures 1 et 2 est que, sur la figure 1 la paroi 11 est une paroi commune qui sépare complètement les deux enceintes 1, 2 à l'exception des ouvertures 12, 13 tandis que sur la figure 2 la paroi 11 est une cloison interne qui limite les deux enceintes 1, 2 à l'intérieur d'un même volume; de cette façon dans le deuxième cas l'ouverture supérieure 13 résulte de l'interruption de la paroi 11 avant sa rencontre avec la paroi supérieure commune de fermeture 8. Dans l'exemple de la figure 1, les deux enceintes 1, 2 sont mieux isolées l'une de l'autre; on pourrait remplacer l'ouverture supérieure 13 par un tube seconde enceinte 2 de fluidisation ces deux enceintes 1, 2 ont chacune une grille 3, 4 respectivement et leur propre arrivée de gaz de fluidisation 5, 6 respectivement, ce qui permet de fluidiser séparément le contenu de l'une et de l'autre enceinte. L'enceinte 1 a dans sa partie supérieure un tube 7 d'évacuation de trop-plein dirigé vers le bas; de plus cette enceinte 1 a une paroi supérieure 8 de fermeture qui est traversée par un tube descendant 9 par où arrive le milieu caloporteur en particules, chargé de calories, en provenance par exemple d'un séparateur tel qu'un cyclone faisant suite à un réacteur de traitement ou à une chaudière à lit fluidisé. Le tube 9 s'enfonce à l'intérieur du lit fluidisé 10 dont le niveau normal est celui du tube de trop-plein 7; l'enfoncement du tube 9 dans le lit 10 est déterminé pour qu'il assure l'isolement pneumatique de l'échangeur de chaleur par rapport au séparateur se trouvant en amont.

L'enceinte 2 est séparée de l'enceinte 1 par une paroi 11 qui a une ouverture inférieure 12 de communication entre les deux enceintes et une ouverture supérieure 13 de communication entre les deux enceintes. La différence entre les exemples des figures 1 et 2 est que, sur la figure 1 la paroi 11 est une paroi commune qui sépare complètement les deux enceintes 1, 2 à l'exception des ouvertures 12, 13 tandis que sur la figure 2 la paroi 11 est une cloison interne qui limite les deux enceintes 1, 2 à l'intérieur d'un même volume; de cette façon dans le deuxième cas l'ouverture supérieure 13 résulte de l'interruption de la paroi 11 avant sa rencontre avec la paroi supérieure commune de fermeture 8. Dans l'exemple de la figure 1, les deux enceintes 1, 2 sont mieux isolées l'une de l'autre; on pourrait remplacer l'ouverture supérieure 13 par un tube de trop-plein 14 dessiné en trait mixte propre à la seconde enceinte 2. De préférence on place la sortie 14 à un niveau identique ou à un niveau légèrement supérieur à celui de la sortie 7. Cette configuration a l'avantage de séparer les gaz de fluidisation des arrivées 5 et 6 (sauf la fraction qui est entraînée par les solides qui passent par l'ouverture 12), à condition que l'ouverture 13 soit immergée dans le lit fluidisé. Dans la configuration de la figure 2, la sortie de trop-plein peut être située soit à gauche (en 7 sur cette figure 2), soit à droite (comme en 14 sur la figure 1). Le choix entre ces différentes configurations dépend des conditions d'utilisation.

La figure 2 montre aussi que l'ouverture inférieure 12 peut être équipée sur son bord inférieur de déflecteurs en V 15 qui minimisent l'influence du gaz de fluidisation d'une enceinte sur le lit de l'autre enceinte; cette disposition peut être adoptée aussi, bien entendu, dans l'exemple de la figure 1.

Dans les deux cas, à l'intérieur de la seconde enceinte 2, entre les niveaux de l'ouverture inférieure 12 et de l'ouverture supérieure 13, est installé un faisceau désigné par ta référence générale 16 de tubes d'échange de chaleur. Ce faisceau est parcouru par un fluide à chauffer à l'aide des calories du milieu caloporteur venant par le tube descendant 9 ou, dans d'autres applications, par un fluide chaud servant à réchauffer le milieu admis par le tube 9.

Ce faisceau 16 comprend des tubes 17 qui sont horizontaux ou qui ont au moins une fraction de leur longueur qui est horizontale ou substantiellement horizontale; de toute façon, on peut définir une distance horizontale ou écart horizontal EH entre leurs axes dans un plan horizontal. De même, les tubes 17 sont étagés en sens vertical, de sorte que l'on peut définir entre leurs axes un écart vertical EV qui sépare les parties horizontales de ces tubes.

Le mot faisceau ne signifie pas que les tubes 17 s'étendent tous entre deux mêmes collecteurs. La figure 3 montre des tubes 17 qui relient un collecteur inférieur 18 à un collecteur supérieur 19 en présentant une partie centrale 17a qui est inclinée sur l'horizontale; ces tubes sont séparés par un écart horizontal EH. La figure 4 montre plusieurs col lecteurs inférieurs 18A, 18B et 18C, 18D étagés en sens vertical sur un côté et sur un côté opposé; ces collecteurs inférieurs sont reliés respectivement par des tubes 17 inclinés comme sur la figure 3 à des collecteurs supérieurs 19A, 19B et 19C, 19D également étagés sur un côté et sur le côté opposé. Entre ces tubes, il existe un écart vertical EV séparant leurs axes.

Le mot faisceau désigne donc ici un ensemble de tubes reliant deux ou plus de deux collecteurs et disposés de telle sorte que l'on peut définir entre eux d'une part un écart horizontal EH et d'autre part un écart vertical EV. Des tubes totalement verticaux à l'intérieur de l'enceinte 2 ne satisferaient pas à cette définition, mais des nappes étagées en sens vertical de tubes horizontaux ou, de préférence, peu inclinés sur l'horizontale, y satisfont; cependant, comme on l'a dit, une inclinaison des tubes sur l'horizontale est admissible tant qu'un écart vertical EV peut être défini entre les tubes.

Les tubes 17 du faisceau 16 ont à l'intérieur de l'enceinte 2 une compacité qui est définie par l'écart horizontal EH et par l'écart vertical EV. Dans un exemple réel de réalisation, dans une enceinte 2 ayant des dimensions de 0,40 m x 0,30 m, soit une surface de grille 4 de 0,12 m², les tubes 17 avaient un diamètre extérieur de 25 mm et l'écart horizontal EH était de 37,5 mm; l'écart vertical EV était aussi de 37,5 mm.

L'amélioration du transfert thermique dû à la compacité des tubes 17 dans l'enceinte 2 ne s'obtient totalement que lorsque les particules du milieu caloporteur ont une grosseur déterminée à laquelle correspond une vitesse déterminée du gaz de fluidisation à travers la grille 4 de l'enceinte 2. Dans l'exemple décrit ici, le milieu caloporteur était du sable ayant un diamètre moyen des grains de 500 micromètres; sa densité apparente était de 2,5. La vitesse maximale du gaz de fluidisation était de 0,6 m/s. On a observé alors un débit du milieu caloporteur de 12 t/h à l'intérieur de l'enceinte 2; dans celle-ci la température du lit fluidisé était de 600°C et on a déterminé que le coefficient de transfert entre le lit et les tubes était de 300 W/m²°C.

L'enceinte 2 a en section droite des dimensions supérieures à celles de l'enceinte 1; la différence entre les deux enceintes n'a pas une valeur critique; il suffit que l'enceinte 1 soit capable d'alimenter convenablement l'enceinte 2 en milieu caloporteur.

Les essais ont montré que l'effet favorable de la compacité des tubes sur le coefficient de transfert est plus influencé par l'écart horizontal EN que par l'écart vertical EV.

Outre son coefficient de transfert amélioré, l'échangeur de chaleur de l'invention a une grande souplesse de fonctionnement. Le transfert thermique est réglable de manière continue entre une valeur nulle quand la fluidisation est arrêtée dans l'enceinte 2 et une valeur maximale quand la fluidisation dans l'enceinte 2 est produite à la valeur maximale de la vitesse du gaz de fluidisation. La compacité des tubes 17 dans l'enceinte 2 est la cause dans celle-ci d'une différence de densité des lits fluidisés entre les deux enceintes. Cette différence est d'autant plus grande que la vitesse est plus élevée dans l'enceinte 2 et que la dimension moyenne des particules est plus élevée; elle agit sur le débit de circulation du milieu caloporteur entre l'enceinte 1 et l'enceinte 2.

L'enceinte 2 pourrait être annulaire et pourrait entourer l' enceinte 1. Il est à noter aussi que l'invention n'impose pas une disposition relative déterminée des tubes les uns par rapport aux autres dans un même plan ou dans des plans différents, à condition que les écarts mentionnés plus haut soient respectés. Par exemple les tubes situés dans des plans différents pourraient être parallèles ou disposés selon les directions obtiques ou même selon des directions orthogonales.

## Revendications

1. Echangeur de chaleur comprenant deux enceintes (1, 2) de fluidication ayant chacune une alimentation séparée (5, 6) en gaz de fluidisation, la première enceinte (1) de fluidisation étant munie de moyens d'alimentation (9) en solide sous forme de particules, la seconde enceinte (2) de fluidisation étant mise en communication avec la première enceinte (1) par une ouverture inférieure (12), ayant un moyen supérieur d'évacuation (13, 14) du solide en particules et contenant un faisceau (16) de tubes (17) d'échange de chaleur substantiellement horizontaux, caractérisé en ce que les particules du milieu solide ont des dimensions moyennes comprises entre 50 et 3000 micromètres, la vitesse maximale du gaz de fluidisation dans la seconde enceinte (2) est comprise entre 1,5 fois et 10 fois la vitesse minimale de fluidisation des particules du milieu solide, les tubes (17) d'échange de chaleur sont séparés par un écart horizontal (EH) qui est compris entre 1, 2 fois et 3 fois la valeur de leur diamètre extérieur et par un écart vertical (EV) qui est compris entre 1, 2 fois et 3 fois la valeur de leur diamètre extérieur.

2. Echangeur selon la revendication 1, caractérisé en ce que les particules du solide ont des dimensions incluses entre 100 et 2000 micromètres.

3. Echangeur selon la revendication 1, caractérisé en ce que le solide en particules est du sable ayant une grosseur de 500 micromètres avec une densité apparente de 2,5 et la vitesse du gaz de fluidisation est choisie entre 0,45 m/s et 0,70 m/s.

4. Echangeur selon la revendication 1, caractérisé en ce que l'écart horizontal (EH) a une valeur égale à 1,5 fois environ le diamètre extérieur des tubes et l'écart vertical (EV) a une valeur égale à 1,5 fois environ le diamètre extérieur des tubes.

## Patentansprüche

1. Wärmetauscher, umfassend zwei Fließbettbehälter (1, 2), die jeweils eine eigene Trägergaszufuhr (5, 6) aufweisen, wobei der erste Fließbettbehälter mit einer Vorrichtung (9) zum Zuführen von Feststoff in Partikelform versehen ist, und wobei der zweite Fließbettbehälter (2) mit dem ersten Fließbettbehälter (1) über eine untere Öffnung (12) verbunden ist und eine obere Vorrichtung (13, 14) für die Ableitung der Feststoffpartikel sowie ein Bündel (16) von im wesentlichen horizontalen Wärmetauscherröhren (17) aufweist, dadurch gekennzeichnet, daß die Partikel des Feststoffmediums mittlere Abmessungen im Bereich zwischen 50 und 3000 Mikrometer haben, daß die maximale Geschwindigkeit des Trägergases in dem zweiten Fließbettbehälter (2) zwischen 1,5 und 10 mal so hoch wie die minimale Fließgeschwindigkeit der Partikel des Feststoffmediums ist, daß die Wärmetauscherröhren (17) einen horizontalen Abstand (EH) voneinander haben, der 1, 2 bis 3 mal so groß wie ihr äußerer Durchmesser ist und daß die Wärmetauscherröhren (17) einen vertikalen Abstand voneinander haben, der 1, 2 bis 3 mal so groß wie ihr äußerer Durchmesser ist.

2. Wärmetauscher nach Anspruch 1, dadurch gekennzeichnet, daß die Feststoffpartikel Abmessungen im Bereich zwischen 100 und 2000 Mikrometer haben.

3. Wärmetauscher nach Anspruch 1, dadurch gekennzeichnet, daß der partikelförmige Feststoff Sand mit einer Korngröße von 500 Mikrometer und einer Schüttdichte von 2,5 ist und daß die Geschwindigkeit des Trägergases zwischen 0,45 m/s und 0,7 m/s gewählt wird.

4. Wärmetauscher nach Anspruch 1, dadurch gekennzeichnet, daß der horizontale Abstand (EH) ungefähr 1,5 mal so groß wie der äußere Durchmesser der Röhren ist und daß der vertikale Abstand (EH) ungefähr 1,5 mal so groß wie der äußere Durchmesser der Röhren ist.

5

**0 199 655**

**Claims**

1. A heat-exchanger comprising two enclosures (1, 2) for fluidization, each having a separate feed (5, 6) of fluidization gas, the first fluidization enclosure (1) being equipped with means (9) of feeding it with solid in the form of particles, the second fluidization enclosure (2) being put into communication with the first enclosure (1) through a lower opening (12), having upper means (13, 14) of discharge of the solid in particles and containing a bundle (16) of substantially horizontal beat exchange tubes (17), characterized in that the particles of the solid medium have mean dimensions lying between 50 and 3000 micrometres, the maximum velocity of the fluidization gas in the second enclosure (2) lies between 1.5 times and 10 times the minimum velocity for fluidization of the particles of the solid medium, and the heat exchange tubes (17) are separated by a horizontal spacing (EH) which lies between 1.2 times and 3 times the value of their outer diameter and by a vertical spacing (EV) which lies between 1.2 times and 3 times the value of their outer diameter.

2. An exchanger as in Claim 1, characterized in that the particles of the solid have dimensions between 100 and 2000 micrometres inclusive.

3. An exchanger as in Claim 1, characterized in that the solid in particles is sand having a size of 500 micrometres with an apparent density of 2.5 and the velocity of the fluidization gas is chosen between 0.45 m/s and 0.70 m/s.

4. An exchanger as in Claim 1, characterized in that the horizontal spacing (EH) has a value equal to about 1.5 times the outer diameter of the tubes and the vertical spacing (EV) ha a value equal to about 1.5 times the outer diameter of the tubes.

*Fig:1*

*Fig:2*

*Fig:3*

*Fig:4*